**Europäisches Patentamt**

**European Patent Office**

**Office européen des brevets**

(19)

(11) Numéro de publication: **0 256 897**
**B1**

(12) # FASCICULE DE BREVET EUROPEEN

(45) Date de publication du fascicule du brevet:
31.10.90

(51) Int. Cl.⁵: **B60G 17/04,** G05G 7/02

(21) Numéro de dépôt: **87401493.9**

(22) Date de dépôt: **29.06.87**

(54) Dispositif d'assistance pour une commande de correcteurs d'assiette de véhicules automobiles.

(30) Priorité: **10.07.86 FR 8610099**

(43) Date de publication de la demande:
**24.02.88 Bulletin 88/8**

(45) Mention de la délivrance du brevet:
**31.10.90 Bulletin 90/44**

(84) Etats contractants désignés:
**DE GB IT**

(56) Documents cités:
**FR-A- 440 088**
**FR-A- 2 284 472**
**US-A- 4 236 421**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Hauguel, Fabrice, 13, Allée Vercingétorix, F-95250 Beauchamp(FR)**

(74) Mandataire: **Moncheny, Michel et al, c/o Cabinet Lavoix 2 Place d'Estienne d'Orves, F-75441 Paris Cedex 09(FR)**

# Description

La présente invention a pour objet un dispositif d'assistance pour une commande de correcteurs d'assiette de véhicules automobiles.

Certains véhicules automobiles et notamment les véhicules à suspension hydropneumatique sont équipés d'un dispositif de correction d'assiette automatique qui permet de conserver une assiette constante quelle que soit la charge. Ce dispositif est généralement constitué, pour chaque essieu, d'une barre flexible, reliée à une barre anti-devers, qui détecte la position moyenne des deux roues de l'essieu et qui commande un distributeur hydraulique. Lorsque la roue s'écarte d'une position de référence, l'effort dans la barre flexible et l'effort au distributeur augmentent jusqu'à ce que le distributeur envoie la pression dans les éléments porteurs pour rétablir la position de référence.

De plus, ces dispositifs sont généralement équipés d'une commande manuelle de correcteurs d'assiette qui permet, selon les besoins, de modifier la position de référence, donc la garde au sol du véhicule.

Cette commande de correcteurs d'assiette comporte généralement un levier de manoeuvre immobilisable en plusieurs positions déterminées et directement relié à une tringle ou à deux tringles sensiblement alignées et opposées réglant chacune la tension ou la compression d'un élément élastique qui agit sur un correcteur de hauteur.

La manoeuvre du levier est relativement dure, notamment pour le placer dans la position correspondant à la tension maximale de l'élément élastique, si bien qu'il est nécessaire de lui associer un asservissement.

A cet effet, on connaît un mécanisme d'asservissement comprenant un moteur électrique pour entraîner le levier relié aux tringles. Mais, un tel mécanisme est particulièrement onéreux, car il comprend non seulement le moteur destiné à entraîner le levier, par l'intermédiaire d'un réducteur à engrenage, mais également des moyens reliant un interrupteur électrique à un curseur de commande de façon telle que le levier entraîné par le moteur s'immobilise dans des positions déterminées correspondant à celles du curseur.

L'invention a donc pour but de réaliser avec des moyens simples et de façon relativement peu coûteuse, une commande de correcteurs d'assiette dont la manoeuvre ne nécessite qu'un faible effort.

L'invention concerne donc un dispositif d'assistance comportant un levier de manoeuvre immobilisable en plusieurs positions et relié à au moins une tringle qui tire ou pousse sur un élément élastique agissant sur un organe de correction d'assiette dans un sens ou dans l'autre, selon que ce levier de manoeuvre, ainsi que la tringle, passent d'une position médiane à l'une ou l'autre des deux positions extrêmes.

Ce dispositif est caractérisé en ce que la liaison entre le levier de manoeuvre et la tringle est assurée par l'intermédiaire d'un basculeur qui pivote sensiblement d'un quart de tour quand ledit levier passe de sa position médiane à l'une ou l'autre des positions extrêmes et qui est relié à un vérin d'assistance mécanique exerçant sur ledit basculeur une force radiale et centripète en position médiane et tendant à le faire tourner dans le sens de l'éloignement de sa position médiane quand il en est écarté.

Suivant une autre caractéristique, la tringle ou une pièce la prolongeant est accrochée au basculeur en un point écarté de l'axe de rotation dudit basculeur suivant un rayon sensiblement perpendiculaire à la tringle quand elle est en position médiane et sensiblement alignée avec ladite tringle quand elle est dans l'une ou l'autre des deux positions extrêmes.

D'autres particularités et avantages de l'invention apparaîtront au cours de la description qui va suivre d'un exemple de réalisation du dispositif selon l'invention, en référence aux dessins annexés:

- la Figure 1 est une vue schématique de l'ensemble du dispositif de commande de correcteurs d'assiette,
- la Figure 2 est une vue à plus grande échelle du dispositif d'assistance mécanique,
- la Figure 3 est une vue en coupe selon la ligne 3-3 de la figure 2,
- les Figures 4 à 7 sont des vues schématiques montrant les différentes positions du dispositif de commande.

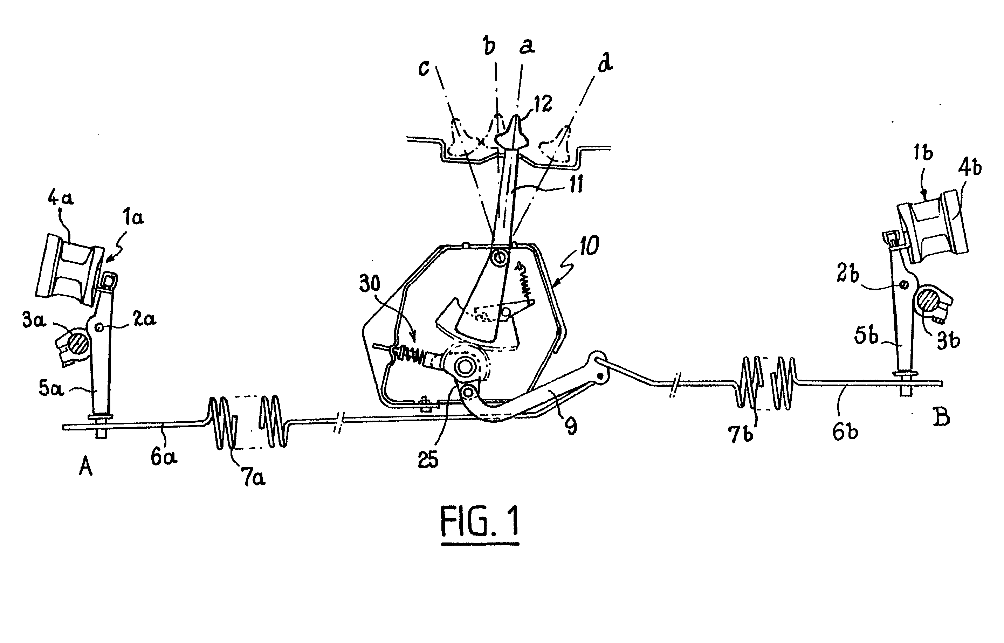

On voit sur la Figure 1 que chaque essieu A et B d'un véhicule notamment à suspension hydropneumatique est muni d'un dispositif de correction d'assiette automatique respectivement 1a et 1b, permettant au véhicule de conserver une assiette constante quelle que soit la charge.

Pour chaque essieu, le dispositif 1a, 1b est constitué d'une barre flexible 2a, 2b, reliée à une barre anti-devers 3a, 3b qui détecte la position moyenne des deux roues, non représentées, de l'essieu et qui commande un distributeur hydraulique 4a, 4b par l'intermédiaire d'un levier 5a, 5b.

Lorsqu'une roue, par exemple de l'essieu avant A, s'écarte de la position de référence, l'effort dans la barre flexible 2a augmente ainsi que l'effort au distributeur 4a. Ce distributeur envoie donc la pression dans les éléments porteurs, non représentés, pour rétablir la position de référence. Il en est de même pour l'essieu arrière B, les deux essieux A et B étant commandés indépendamment.

De plus, les dispositifs 1a et 1b de correction d'assiette avant et arrière sont également pourvus d'une commande manuelle permettant de modifier l'assiette du véhicule et d'obtenir, par exemple, quatre positions : une position route correspondant à la correction automatique, une position intermédiaire qui permet d'augmenter la garde au sol du véhicule d'environ 50 mm, une position haute où le véhicule est en butée de détente, et enfin une position basse où le véhicule est en butée d'attaque.

A cet effet, le levier 5a du dispositif de correction avant 1a est relié à une tringle 6a munie d'un élément élastique 7a et il actionne le distributeur 4a en fonction des efforts qui lui sont appliqués par la barre flexible 2a et par l'élément 7a.

Le levier 5b du dispositif de correction arrière 1b est également relié à une tringle 6b munie d'un élément élastique 7b.

Les extrémités des tringles 6a et 6b, opposées aux leviers 5a et 5b, sont accrochées sur une biellette 9 d'un mécanisme, désigné dans son ensemble par la référence 10, de commande des dispositifs de correction d'assiette avant et arrière 1a et 1b.

Ce mécanisme 10 est commandé par un levier de manoeuvre 11 muni d'un bouton de commande 12 actionné par un utilisateur. Le levier de manoeuvre 11 peut occuper quatre positions, une position a correspondant à la position route, une position intermédiaire b pour augmenter la garde au sol du véhicule, une position c correspondant à la position haute du véhicule et une position d correspondant à la position basse du véhicule.

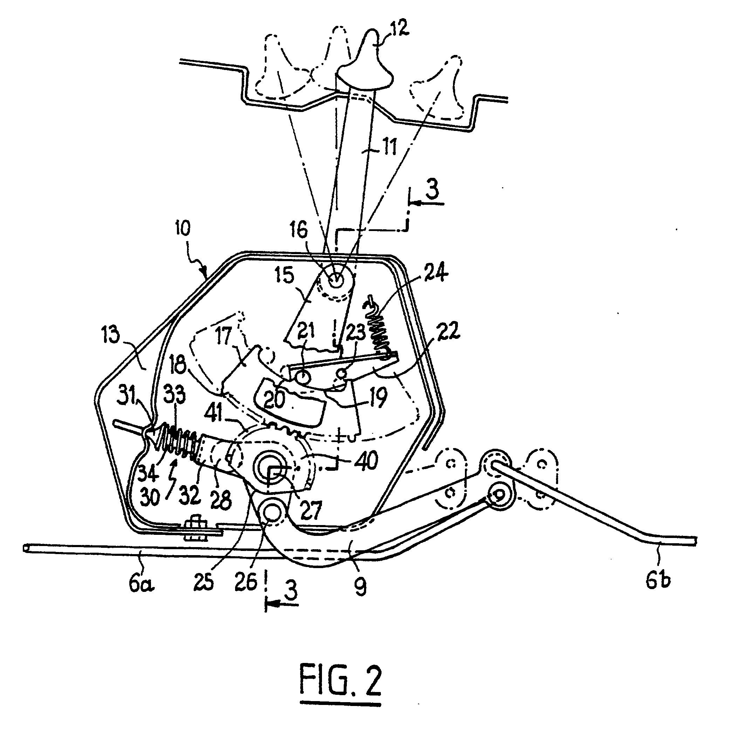

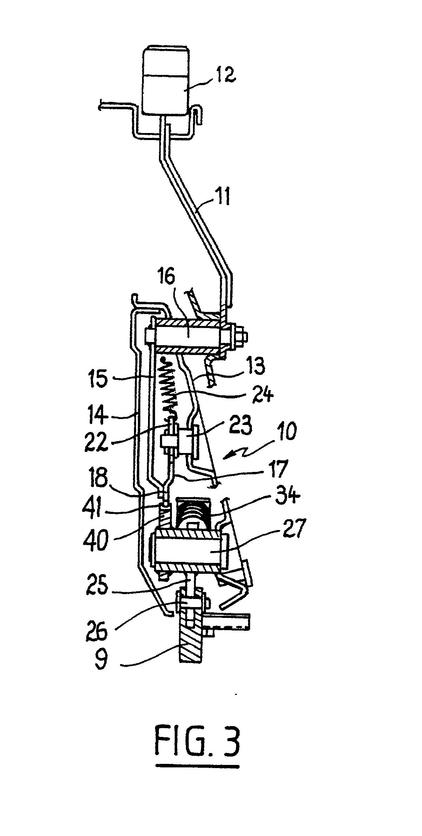

En se reportant maintenant aux Figures 2 et 3, on va décrire plus en détail le mécanisme de commande 10.

Le mécanisme de commande 10 comporte une platine 13 supportant les différents éléments et sur laquelle est monté un cache 14 (Figure 3).

L'extrémité du levier de manoeuvre 11, opposée au bouton 12, est reliée à un levier 15 par l'intermédiaire d'un axe 16 supporté par la platine 13. A la partie inférieure du levier 15 est monté un secteur 17 muni de dentures 18 et qui pivote en même temps que le levier 15 autour de l'axe 16 sous l'action du levier de manoeuvre 11. A l'opposé des dentures 18, le secteur 17 comporte une rampe 19 munie de crans 20 correspondant aux différentes positions du levier de manoeuvre 11. Les crans 20 coopérent avec un élément roulant 21 formé par exemple par une bille ou un galet qui est maintenu appliqué sur ladite rampe 19 par un levier 22 articulé sur la platine 13 par un axe 23 et rappelé par un ressort 24 fixé à l'extrémité opposée du levier 17.

L'élément 21 roule sur la rampe 19, et grâce aux crans 20 et au ressort 24, permet de faire ressentir à l'utilisateur des points durs pour marquer les quatre positions de réglage.

Comme nous l'avons indiqué précédemment, les extrémités des tringles 6a, 6b de commande des dispositifs de correction d'assiette sont accrochées sur une extrémité de la biellette 9. L'autre extrémité de la biellette 9 est accrochée à un basculeur 25 en un point 26 écarté de l'axe 27 de rotation dudit basculeur, supporté par la platine 13.

D'autre part, le basculeur 25 coopère avec un vérin mécanique d'assitance 30. Ce vérin 30 est constitué d'une coupelle oscillante 31 en appui sur la platine 13, d'une coupelle 32 articulée sur le basculeur 25 en un point 28 et solidaire d'une tige 33 de guidage traversant ladite coupelle oscillante, et d'un ressort hélicoïdal 34 comprimé entre ces deux coupelles.

Enfin, le basculeur 25 est solidaire en rotation, par l'intermédiaire de l'axe 27, avec un secteur denté 40 dont les dents 41 engrènent avec les dents 18 du secteur denté 17 solidaire du levier de manoeuvre 11 par le levier 15.

Les secteurs dentés 17 et 40 ont pour but de démultiplier le débattement angulaire qui est sensiblement de 180° au niveau de basculeur 25 pour bénéficier des avantages de l'arcboutement en fin de course et pour ramener le débattement angulaire du bouton de commande 12 à une valeur de 45° afin de simuler la trajectoire d'un curseur au niveau dudit bouton de commande.

La mise en oeuvre du dispositif qui vient d'être décrit est la suivante.

D'une manière générale, les efforts appliqués aux distributeurs 4a et 4b respectivement du train avant A et du train arrière B, sont transmis et obtenus par les tringles 6a et 6b, chacune munie d'un élément élastique respectivement 7a et 7b. Le mécanisme de commande 10 impose un déplacement aux tringles 6a et 6b par la biellette 9 qui, en comprimant ou tirant l'élément ressort 7a, 7b, se transforme en un effort de compression ou de traction au niveau de chaque levier 5a, 5b, d'actionnement d'un distributeur 4a, 4b.

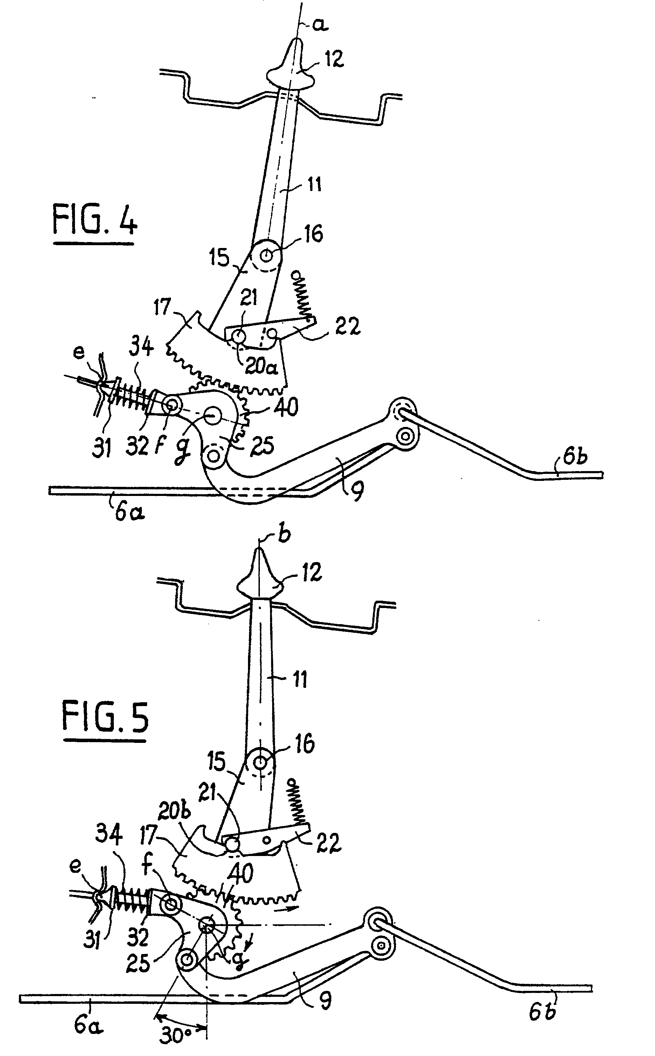

En position route, et comme représenté à la figure 4, le levier de manoeuvre 11 se trouve dans la position a. La biellette 9 impose une position médiane aux tringles 6a et 6b. Les efforts dans lesdites tringles sont nuls ou faibles et le ressort 34 est comprimé à son maximum. Si l'on désigne par e le point d'oscillation de la coupelle 31, par f le point d'articulation de la coupelle 32 sur le basculeur 25 et par g l'axe d'articulation dudit basculeur, on voit que dans cette position haute, les trois points e, f et g sont alignés, le basculeur 25 se trouvant en équilibre. Le ressort 34 exerce sur le basculeur 25 une force radiale et centripète et n'engendre aucun couple de rotation sur ledit basculeur. L'élément roulant 21 maintient cette position dans le cran 20a sur la rampe 19 du secteur denté 17.

Quand l'utilisateur désire passer en position intermédiaire, il déplace le levier de manoeuvre 11 pour l'amener dans la position b. Sous l'action du levier de manoeuvre 11 et du levier 15, le secteur denté 17 pivote et entraîne en rotation le secteur denté 40. Le basculeur 25 pivote d'un angle de 30° et impose un déplacement à la biellette 9 qui écarte les tringles 6a et 6b de leur position médiane dans un sens tel que l'élément élastique 7a de la tringle 6a se comprime et l'élément élastique 7b de la tringle 6b s'étire. Les trois points e, f et g se désalignent et le ressort hélicoïdal 34 commence à se détendre, exerçant sur le basculeur une force qui soulage l'action de l'utilisateur.

Cette position est maintenue grâce à l'élément roulant 21 dans le cran 20b formé dans la rampe 19 du secteur denté 17.

Les éléments élastiques 7a, 7b des tringles 6a, 6b imposent un effort aux leviers 5a, 5b, de sorte que les distributeurs 4a, 4b envoient du liquide sous pression dans les éléments porteurs, ce qui augmente la garde au sol du véhicule.

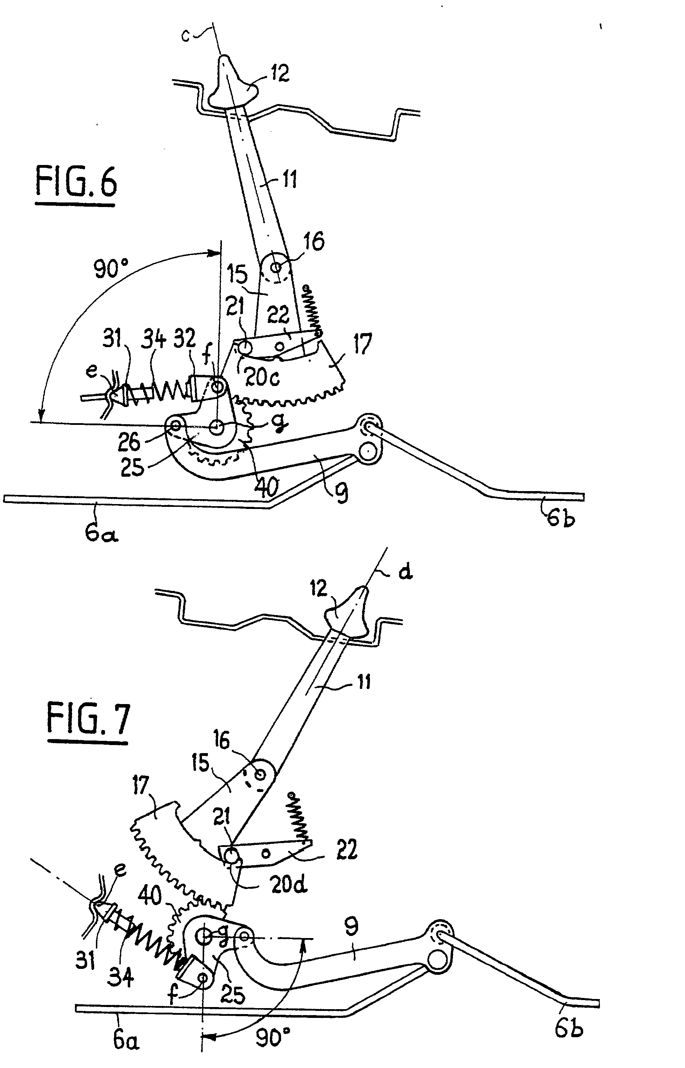

En position haute (Figure 6), l'utilisateur déplace le levier de manoeuvre 11 pour l'amener dans la position c ce qui entraîne la rotation du secteur denté 40 par l'intermédiaire des leviers 11 et 15 et du secteur denté 17. Le basculeur 25 pivote d'un angle de 90° par rapport à la position de la Fig. 4 et impose à la biellette 9 un déplacement maximal qui a pour effet d'obtenir une compression maximale du ressort 7a et une tension maximale du ressort 7b.

Dans cette position, le point d'accrochage 26 de la biellette 9 sur le basculeur 25 est sensiblement aligné avec le point d'accrochage des tringles 6a, 6b sur ladite biellette. Le ressort hélicoïdal 34 est pratiquement à l'état libre, ce qui rend l'assistance pratiquement nulle. Mais, grâce à la variation de démultiplication de système basculeur-biellette qui évolue d'un rapport 1 en position route à un rapport infini en position haute, l'utilisateur n'a pas d'effort à exercer sur le bouton 12 du levier de manoeuvre. Le maintien en position est obtenu par butée positive de l'élément roulant 21 dans le cran 20c de la rampe 19.

En position basse telle que représentée sur la figure 7, l'utilisateur déplace le levier de manoeuvre 11 pour l'amener dans la position d.

Dans ce cas, sous l'action des secteurs dentés 17 et 40, le basculeur 25 effectue une rotation d'un angle de 90° par rapport à la position route, symétriquement à la position haute et on retrouve les mêmes effets, mais inversés, que dans ladite position haute.

Le maintien dans cette position est réalisé par l'élément 21 dans le cran 20d.

On voit donc que le dispositif permet de reboucler les efforts principaux sur le basculeur, ce qui permet de réduire la résistance mécanique des pièces comme les secteurs dentés et les leviers, du fait de la réduction importante des efforts dès l'entrée du mouvement.

Le système à bille ou à galet tournant permet de donner une stabilité à chaque position en freinant le secteur denté relié au levier de manoeuvre mais peut également créer une légère force soulageant l'utilisateur en donnant une forme inclinée appropriée à la rampe 19 d'appui dudit galet ou bille.

De plus, le système basculeur-biellette et l'assistance mécanique à ressort permettent d'obtenir une commande à faible effort et quasiment à effort constant.

Par ailleurs, ce dispositif peut bien évidemment être utilisé pour la commande d'un seul correcteur d'assiette, et dans ce cas, la tringle de commande peut être accrochée directement sur le basculeur.

## Revendications

1.- Dispositif d'assistance pour une commande d'au moins un correcteur d'assiette de véhicule automobile comportant un levier de manoeuvre (11) immobilisable en plusieurs positions et relié à au moins une tringle (6a, 6b) qui tire ou pousse sur un élément élastique (7a, 7b) agissant sur un organe de correction d'assiette (4a, 4b) selon que ce levier de manoeuvre (11) ainsi que la tringle (6a, 6b) passe d'une position médiane à l'une ou l'autre des deux positions extrêmes, caractérisé en ce que la liaison entre le levier de manoeuvre (11) et la tringle (6a, 6b) est assurée par l'intermédiaire d'un basculeur (25) qui pivote sensiblement d'un quart de tour quand ledit levier (11) passe de sa position médiane à l'une ou l'autre des positions extrêmes et qui est relié à un vérin d'assistance mécanique (30) exerçant sur ledit basculeur une force radiale et centripète en position médiane et tendant à le faire tourner dans le sens de l'éloignement de sa position médiane quand il en est écarté.

2.- Dispositif d'assistance selon la revendication 1, caractérisé en ce que la tringle (6a, 6b) ou une pièce la prolongeant est accrochée au basculeur (25) en un point (26) écarté de l'axe de rotation (27) dudit basculeur suivant un rayon sensiblement perpendiculaire à la tringle (6a, 6b) quand elle est en position médiane, et sensiblement aligné avec ladite tringle quand elle est dans l'une ou l'autre des deux positions extrêmes.

3.- Dispositif d'assitance selon les revendications 1 et 2, caractérisé en ce que l'entraînement du basculeur (25) par le levier de manoeuvre (11) s'effectue par engrènement de dentures (18, 41) formées sur deux secteurs (17, 40) respectivement solidaires du levier (11) et du basculeur (25).

4.- Dispositif d'assistance selon l'une des revendications 1 à 3, caractérisé en ce que l'immobilisation du levier de manoeuvre (11) s'effectue par coopération d'un élément roulant (21) formé par exemple par une bille ou un galet avec une rampe (19) à crans (20) formé sur l'un des secteurs (17, 40), ledit élément roulant (21) étant maintenu appliqué sur la rampe (19) par des moyens élastiques (24), notamment par l'intermédiaire d'un levier (22) qui s'articule sur une platine (13) supportant les différents éléments du dispositif.

5.- Dispositif d'assistance selon la revendication 1, caractérisé en ce que le vérin d'assistance mécanique (30) est constitué par un ressort hélicoïdal (34) comprimé entre une coupelle oscillante (31) en appui sur la platine (13) et une coupelle (32) qui s'articule sur le basculeur (25) et qui est solidaire d'une tige de guidage (33) traversant ladite coupelle oscillante.

6.- Dispositif d'assistance selon les revendications 1 et 2, caractérisé en ce que deux tringles (6a, 6b) associées respectivement à deux correcteurs d'assiette (4a, 4b) sont accrochées à l'extrémité d'une biellette (9) dont l'autre extrémité est accrochée à un basculeur (25) audit point (26) écarté de l'axe de rotation (27).

## Patentansprüche

1. Hilfsvorrichtung für die Steuerung wenigstens einer Niveauregelung eines Kraftfahrzeugs mit einem Betätigungshebel (11), der in mehreren Lagen arretiert werden kann und der mit wenigstens einem Gestänge (6a, 6b) verbunden ist, der ein elastisches Element (7a, 7b) zieht oder schiebt, das auf ein Korrekturorgan (4a, 4b) für das Niveau einwirkt derart, daß der Betätigungshebel (11) und das Gestänge (6a, 6b) aus einer Mittellage in die eine oder andere von zwei Extremlagen verschoben werden, dadurch gekennzeichnet, daß die Verbindung zwischen dem Betätigungshebel (11) und dem Gestänge (6a, 6b) über ein Schwingelement (25) erfolgt, das im wesentlichen um eine Vierteldrehung verschwenkt, wenn der Hebel (11) aus seiner Mittellage in die eine der beiden Extremlagen verschoben wird, wobei das Schwingelement mit einem mechanischen Hilfskraftspeicher (30) verbunden ist, der in der Mittellage auf das Schwingelement eine radiale und zum Mittelpunkt gerichtete Kraft ausübt und der es im Sinne einer Entfernung von der Mittellage zu drehen sucht, wenn es sich außerhalb der Mittellage befindet.

2. Hilfsvorrichtung nach Anspruch 1, dadurch gekennzeichnet, daß das Gestänge (6a, 6b) oder ein Verlängerungsstück des Gestänges mit dem Schwingelement (25) an einem Punkt (26) verbunden ist, der von der Drehachse (27) des Schwingelements längs eines Radius' entfernt ist, der im wesentlichen rechtwinklig zum Gestänge (6a, 6b) verläuft, wenn sich das Gestänge in der Mittellage befindet und der mit dem Gestänge im wesentlichen fluchtet, wenn es sich in einer der beiden Extremlagen befindet.

3. Hilfsvorrichtung nach Anspruch 1 und 2, dadurch gekennzeichnet, daß die Mitnahme des Schwingelements (25) mittels des Betätigungshebels (11) über Verzahnungen (18, 41) erfolgt, die an zwei Sektoren ausgebildet sind, die mit dem Hebel (11) bzw. mit dem Schwingelement (25) fest verbunden sind.

4. Hilfsvorrichtung nach einem der Ansprüche 1 bis 3, dadurch gekennzeichnet, daß die Arretierung des Betätigungshebels (11) über ein Kugelelement (21) erfolgt, das beispielsweise von einer Kugel oder einer Rolle gebildet ist und das mit einer profilierten Rampe (19, 20) zusammenarbeitet, die an einem der Sektoren (17, 40) ausgebildet ist, wobei das Kugelelement (21) durch elastische Mittel (24) in Anlage an der Rampe (19) gehalten ist, insbesondere über einen Hebel (22), der an einer Platine (13) drehbar gelagert ist, die die Bauteile der Vorrichtung trägt.

5. Hilfsvorrichtung nach Anspruch 1, dadurch gekennzeichnet, daß der Hilfskraftspeicher (30) als Schraubenfeder (34) ausgebildet ist, die zwischen einer oszillierenden Schale (31) in Anlage an der Platine (13) und einer Schale (32) komprimiert ist, die an das Schwingelement (25) angelenkt ist und die mit einer Führungsstange (33) fest verbunden ist, der die oszillierende Schale durchquert.

6. Hilfsvorrichtung nach Anspruch 1 und 2, dadurch gekennzeichnet, daß zwei Gestänge (6a, 6b), die zwei Niveauregelungen (4a, 4b) zugeordnet sind, mit dem Ende eines Schwingarmes (9) verbunden sind, dessen anderes Ende mit einem Schwingelement (25) in dem von der Drehachse (27) beabstandeten Punkt (26) verbunden ist.

**Claims**

1. An auxiliary device for the control of at least one motor vehicle attitude corrector, comprising an operating lever (11) which can be immobilized in several positions and is connected to at least one rod (6a, 6b) which pulls or pushes on a resilient member (7a, 7b) acting on an attitude correction member (4a, 4b) according to the movement of this operating lever (11) as well as the rod (6a, 6b) from a median position to one or other of the end positions, characterized in that the connection between the operating lever (11) and the rod (6a, 6b) is ensured through the intermediary of a rocker (25) which pivots by substantially a quarter of a turn when said lever (11) moves from its median position to one or other of the end positions and which is connected to an auxiliary mechanical jack (30) exerting a radial and centripetal force on said rocker in the median position and tending to make it turn away from its median position when it is remote therefrom.

2. An auxiliary device according to claim 1, characterized in that the rod (6a, 6b) or a piece extending it is booked to the rocker (25) at a point (26) remote from the axis of rotation (27) of said rocker according to a radius substantially perpendicular to the rod (6a, 6b) when it is in the median position and substantially aligned with said rod when it is in one or other of the two end positions.

3. An auxiliary device according to claims 1 and 2, characterized in that the drive of the rocker (25) by the operating lever (11) is effected by tooth gearing (18, 41) formed on two sections (17, 40) integral with the lever (11) and the rocker (25) respectively.

4. An auxiliary device according to any one of claims 1 to 3, characterized in that immobilisation of the operating lever (11) is effected by interaction of a rolling member (21) formed for example of a ball or a roller with a ramp (19) with notches (20) formed on one of the sections (17, 40), said rolling member (21) being held against the ramp (19) by resilient means (24), in particular through the intermediary of a lever (22) articulated to a plate (13) supporting the various elements of the device.

5. An auxiliary device according to claim 1, characterized in that the auxiliary mechanical jack (30) consists of a helical spring (34) compressed between an oscillating cap (31) supported by the plate (13) and a cap (32) articulated to the rocker (25) and integral with a guide rod (33) passing through said oscillating cap.

6. An auxiliary device according to claims 1 and 2, characterized in that two rods (6a, 6b) associated respectively with two attitude correctors (4, 4b) are hooked to the end of a rocker bar (9), the other end of which is hooked to a rocker (25) at said point (26) remote from the axis of rotation (27).

EP 0 256 897 B1

FIG. 1

FIG. 2

FIG. 3

FIG. 4

FIG. 5

FIG.6

FIG.7